# EUROPEAN PATENT SPECIFICATION

(11) **EP 4 559 187 B1**
(45) Date of publication and mention of the grant of the patent: **13.05.2026**
(21) Application number: 23750900.5
(22) Date of filing: 18.07.2023
(51) Int. Cl.: H04N 19/46, H04N 19/597, H04N 19/85, G06T 11/60

(54) **MULTIPLE-INTENT COMPOSITE IMAGE ENCODING AND RENDERING**
MEHRFACH-UNBEWUSSTE ZUSAMMENGESETZTE BILDCODIERUNG UND -WIEDERGABE
CODAGE ET RENDU D'IMAGE COMPOSITE À MULTIPLES ENTRÉES

(30) Priority: 18.07.2022 US 202263368766 P; 14.12.2022 EP 22213582
(43) Date of publication of application: 28.05.2025
(73) Proprietor: Dolby Laboratories Licensing Corporation, San Francisco, CA 94103 (US)
(72) Inventor: ATKINS, Robin, San Francisco, California 94103 (US); PYTLARZ, Jaclyn Anne, San Francisco, California 94103 (US); ZUENA, Jake William, San Francisco, California 94103 (US)
(74) Representative: Dolby International AB Patent Group Europe
(86) International application number: PCT/US2023/070361
(87) International publication number: WO 2024/020356

(56) References cited:
- US-A1- 2015 358 646
- US-A1- 2016 005 201
- US-A1- 2019 164 262
- TIM BORER ET AL: "Perceptual Uniformity for High-Dynamic-Range Television Systems", SMPTE MOTION IMAGING JOURNAL, vol. 125, no. 8, 1 October 2016 (2016-10-01), US, pages 75 - 84, XP055595416, ISSN: 1545-0279, DOI: 10.5594/JMI.2016.2602118

## Description

### CROSS-REFERENCE TO RELATED APPLICATIONS

This application claims priority from U.S. Provisional Application No. 63/368,766 filed 18 July 2022, and European Application No. 22213582.4 filed on 14 December 2022.

### BACKGROUND

This application relates generally to systems and methods of image encoding and decoding.

US 2016/0005201 A1 discloses systems and methods for overlaying a second image/video data onto a first image/video data. The first image/video data may be intended to be rendered on a display with HDR, EDR, VDR or UHD capabilities. The second image/video data may comprise graphics, closed captioning, text, advertisement or any data that may be desired to be overlaid and/or composited onto the first image/video data. The second image/video data may be appearance mapped according to the image statistics and/or characteristics of the first image/video data. In addition, such appearance mapping may be made according to the characteristics of the display that the composite data is to be rendered. Such appearance mapping is desired to render a composite data that is visually pleasing to a viewer, rendered upon a desired display.

Tim Borer et al.: "Perceptual Uniformity for High-Dynamic-Range Television Systems", SMPTE Motion Imaging Journal, vol. 125, no. 8, 1 October 2016, pages 75-84, discloses an HDR television system design based on psychovisual aspects of human vision. The authors review the nonlinearities in conventional SDR television systems and explain how these accommodate psychovisual effects. They discuss brightness perception thresholds according to Weber's and De Vries-Rose's laws in the context of minimizing banding artifacts from quantization, which provides a psychovisual definition for video dynamic range. The paper addresses the effect of surround brightness on perception of emissive images in dim or dark environments, which is accommodated through an overall system nonlinearity called the rendering intent, typically implemented as a gamma function. Based on these psychovisual considerations, the authors propose an HDR television system supporting high quality HDR images with dynamic range substantially beyond human visual system limits in a single adaptation state, defined by a single OETF with variable display EOTF to accommodate eye adaptation, while maintaining compatibility with existing SDR displays and infrastructure without requiring metadata.

### SUMMARY

The invention is defined by the independent claims. The dependent claims concern optional features of some embodiments. At least some aspects of the present disclosure may be implemented via methods. Some methods may involve obtaining a set of constituent images for a composite image, determining a common rendering intent to be applied to the set of constituent images, adjusting one or more of the set of constituent images according to the common rendering intent, resulting in an adjusted set of constituent images, creating the composite image based on the adjusted set of constituent images, generating metadata characterizing the common rendering intent, and encoding the composite image and the metadata to create an encoded multiple-intent composite image.

In some examples, adjusting one or more of the set of constituent images according to the common rendering intent can include converting a constituent image among the set of constituent images from a present rendering intent to the common rendering intent.

In some examples, converting the constituent image among the set of constituent images from the present rendering intent to the common rendering intent can includes inverting one or more source adjustments of the constituent image and applying one or more common space adjustments to the constituent image.

In some examples, applying the one or more common space adjustments to the constituent image can include converting sensor values to color values.

In some examples, applying the one or more common space adjustments to the constituent image can include estimating a capture environment surround luminance and white point and applying a white point correction based on the estimated capture environment surround luminance and white point.

In some examples, applying the one or more common space adjustments to the constituent image can include estimating a capture environment surround luminance and applying an optical-optical transfer function (OOTF) to prepare the image for rendering on a reference display device based in part on the estimated capture environment surround luminance.

In some examples, applying the one or more common space adjustments to the constituent image can include applying one or more of a saturation enhancement, a contrast enhancement, individual color saturation adjustments, a slope-offset-power-Tmid enhancement, and tone curve trims.

In some examples, adjusting one or more of the set of constituent images according to the common rendering intent can include converting a constituent image among the set of constituent images from a preprocessed state to the common rendering intent.

In some examples, adjusting one or more of the set of constituent images according to the common rendering intent can include converting a first constituent image among the set of constituent images from a first present rendering intent to the common rendering intent and converting a second constituent image among the set of constituent images from a second present rendering intent to the common rendering intent.

In some examples, determining the common rendering intent can include selecting, as the common rendering intent, a present rendering intent of a constituent image among the set of constituent images.

In some examples, the present rendering intent of the constituent image can be selected as the common rendering intent based on an importance of the constituent image relative to other constituent images of the set of constituent images, wherein the importance of the constituent image is determined based on one or more of a relative size of the constituent image in a rendered space of the composite image, a resolution of the constituent image, a centrality of a location of the constituent image in the rendered space of the composite image, and a point of viewer focus in the rendered space of the composite image.

In some examples, determining the common rendering intent can include identifying a preferred rendering intent as the common rendering intent.

In some examples, the preferred rendering intent can be identified based on one or both of input received via a user interface and information in a configuration file.

Some methods may involve receiving an encoded multiple-intent composite image, decoding the encoded multiple-intent composite image to obtain a composite image and metadata describing one or more common space adjustments applied in creating the composite image, identifying the one or more common space adjustments based on the metadata, adjusting the composite image to invert the one or more common space adjustments, resulting in a reality-render composite image, adjusting the reality-render composite image according to a target rendering intent, resulting in a target-adjusted composite image, and displaying the target-adjusted composite image.

In some examples, adjusting the reality-render composite image according to the target rendering intent can include applying one or more target adjustments to the reality-render composite image.

In some examples, applying the one or more target adjustments to the reality-render composite image can include converting sensor values to color values.

In some examples, applying the one or more target adjustments to the reality-render composite image can include estimating a capture environment surround luminance and white point and applying a white point correction based on the estimated capture environment surround luminance and white point.

In some examples, applying the one or more target adjustments to the reality-render composite image can include estimating a capture environment surround luminance and applying an optical-optical transfer function (OOTF) to prepare the image for rendering on a reference display device based in part on the estimated capture environment surround luminance.

In some examples, applying the one or more target adjustments to the reality-render composite image can include applying one or more of a saturation enhancement, a contrast enhancement, individual color saturation adjustments, a slope-offset-power-Tmid enhancement, and tone curve trims.

In some examples, the target rendering intent can be identified based on one or both of input received via a user interface and information in a configuration file.

Some or all of the operations, functions and/or methods described herein may be performed by one or more devices according to instructions (e.g., software) stored on one or more non-transitory media. Such non-transitory media may include memory devices such as those described herein, including but not limited to random access memory (RAM) devices, read-only memory (ROM) devices, etc. Accordingly, some innovative aspects of the subject matter described in this disclosure can be implemented via one or more non-transitory media having software stored thereon.

At least some aspects of the present disclosure may be implemented via an apparatus. For example, one or more devices may be capable of performing, at least in part, the methods disclosed herein. In some implementations, an apparatus is, or includes, an audio processing system having an interface system and a control system. The control system may include one or more general purpose single- or multi-chip processors, digital signal processors (DSPs), application specific integrated circuits (ASICs), field programmable gate arrays (FPGAs) or other programmable logic devices, discrete gates or transistor logic, discrete hardware components, or combinations thereof.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

### DESCRIPTION OF THE DRAWINGS

These and other more detailed and specific features of various embodiments are more fully disclosed in the following description, reference being had to the accompanying drawings, in which:
FIG. 1 depicts an example image delivery pipeline according to aspects of the disclosure.
FIG. 2 depicts a first example process according to aspects of the disclosure.
FIG. 3 depicts a second example process according to aspects of the disclosure.
FIG. 4 depicts a third example process according to aspects of the disclosure.
FIG. 5 depicts an example operating environment according to aspects of the disclosure.
FIG. 6 depicts an example of a first method according to aspects of the disclosure.
FIG. 7 depicts an example of a second method according to aspects of the disclosure.
FIG. 8 depicts an example of an apparatus according to aspects of the disclosure.

### DETAILED DESCRIPTION

This disclosure and aspects thereof can be embodied in various forms, including hardware, devices or circuits controlled by computer-implemented methods, computer program products, computer systems and networks, user interfaces, and application programming interfaces; as well as hardware-implemented methods, signal processing circuits, memory arrays, application specific integrated circuits (ASICs), field programmable gate arrays (FPGAs), and the like. The foregoing is intended solely to give a general idea of various aspects of the present disclosure, and does not limit the scope of the disclosure in any way.

In the following description, numerous details are set forth, such as optical device configurations, timings, operations, and the like, in order to provide an understanding of one or more aspects of the present disclosure. It will be readily apparent to one skilled in the art that these specific details are merely exemplary and not intended to limit the scope of this application.

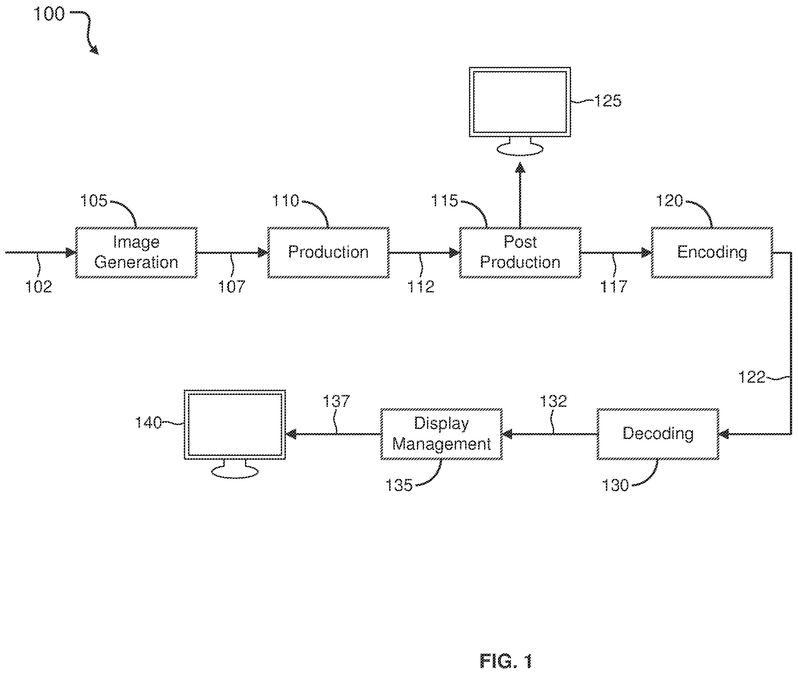

FIG. 1 depicts an example image delivery pipeline 100 showing various stages from image capture to image content display. An image 102, which according to some implementations may be one of a sequence of video frames, is captured or generated using image generation block 105. Image 102 may be digitally captured (e.g., by a digital camera) or generated by a computer (e.g., using computer animation) to provide image data 107. Alternatively, image 102 may be captured on film by a film camera. The film is converted to a digital format to provide image data 107. In a production phase 110, image data 107 is edited to provide an image production stream 112.

The image data of production stream 112 is then provided to a processor (or one or more processors such as a central processing unit (CPU)) at block 115 for post-production editing. Block 115 post-production editing may include adjusting or modifying colors or brightness in particular areas of an image to enhance the image quality or achieve a particular appearance for the image in accordance with the image creator's creative intent. This is sometimes called "color timing" or "color grading." Methods described herein may be performed by the processor at block 115. Other editing (e.g., scene selection and sequencing, image cropping, addition of computer-generated visual special effects, etc.) may be performed at block 115 to yield a final version 117 of the production for distribution. During post-production editing 115, the image (as part of a sequence of video images, according to some implementations) is viewed on a reference display 125. Reference display 125 may, if desired, be a consumer-level display or projector.

Following post-production 115, image data of final production 117 may be delivered to encoding block 120 for delivering downstream to decoding and playback devices such as computer monitors, television sets, set-top boxes, movie theaters, and the like. In some embodiments, encoding block 120 may include audio and video encoders, such as those defined by ATSC, DVB, DVD, Blu-Ray, and other delivery formats, to generate coded bit stream 122. In a receiver, the coded bit stream 122 is decoded by decoding unit 130 to generate a decoded signal 132 representing an identical or close approximation of signal 117. The receiver may be attached to a target display 140 which may have completely different characteristics than the reference display 125. In that case, a display management block 135 may be used to map the dynamic range of decoded signal 132 to the characteristics of the target display 140 by generating display-mapped signal 137. Additional methods described herein may be performed by the decoding unit 130 or the display management block 135. Both the decoding unit 130 and the display management block 135 may include their own processor or may be integrated into a single processing unit. While the present disclosure refers to a target display 140, it will be understood that this is merely an example. It will further be understood that the target display 140 can include any device configured to display or project light; for example, computer displays, televisions, OLED displays, LCD displays, quantum dot displays, cinema, consumer, and other commercial projection systems, heads-up displays, virtual reality displays, and the like.

When capturing a scene using digital devices, the realistic, scene-referred radiometry is rarely transferred directly to produce an image. Instead, it is common practice for the original electronic manufacturer (OEM) or software application designer of the device to adjust the image by, as examples, adapting the image for viewing in a reference viewing environment, such as a dim surround and D65 illumination, and applying aesthetic adjustments such as enhanced contrast and color saturation. These and other adjustments create a preferred rendering of reality that is deemed pleasing to consumers.

Currently, these operations are lossy in two ways. First, the parameters used to apply the operations are not transmitted, and second, the pixel operations may be lossy due to non-linear clipping and quantization, non-invertible operations, unknown algorithms, or unknown order of operations.

It may be desirable instead to be able to transmit the original captured/preprocessed image that represents "reality" as captured by the imaging sensor, and then apply these operations at playback. This can allow for multiple rendering intents: at playback the device can present either the original captured "reality" image, or alternately the device can create the "pleasing" image that is modified from the original captured "reality" image.

It may also be desirable to allow transmitting such content in a backwards-compatible way. In this approach, the modifications to create the "pleasing" image can be applied during capture, and the appropriate parameters transmitted to a playback device to allow it to invert the modifications thus restoring the original captured "reality" image.

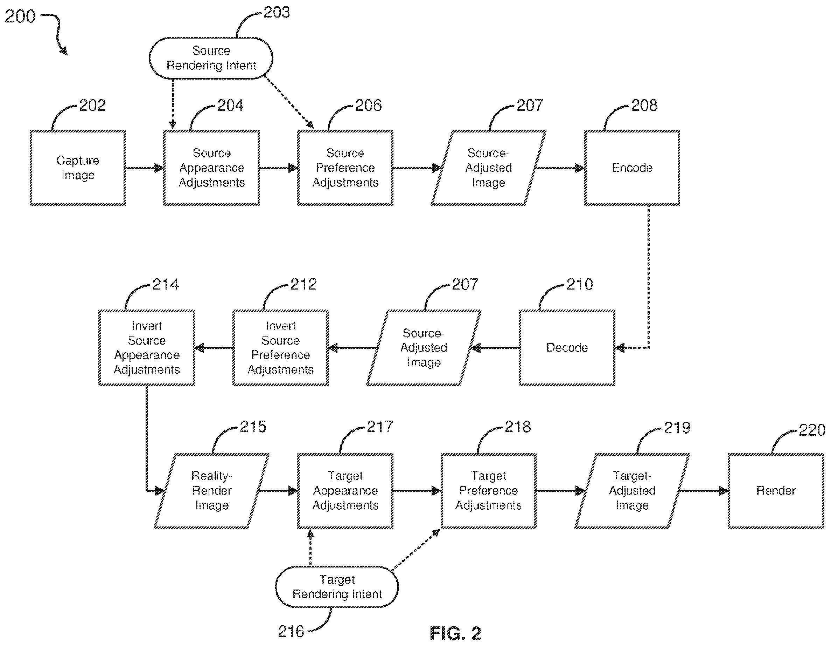

FIG. 2 illustrates an example process 200. Process 200 can allow for encoding and decoding of images with multiple intents using metadata. Process 200 may be performed by, for example, a processor as part of block 115 and/or block 120 for encoding and as part of block 130 and/or block 135 for decoding.

At step 202, an image is captured. In digital-capture devices, an exposed scene is transferred to sensor values in a one-channel representation. Through a process known as demosaicing, the one-channel image representation is expanded into a three channel one: red, green, and blue (RGB). There are numerous approaches to demosaicing, any of which would be sufficient in the embodiments disclosed herein.

Step 202 may include, as non-limiting examples, reading single-channel values from a sensor, applying a demosaicing scheme to create a three-color-channel (e.g., RGB) image, optionally applying a 3x3 transformation to conform image sensitivities to those of desired tricolor (e.g., RGB) primaries. Step 202 may also include measuring a capture surround luminance (e.g., a level of ambient light in the capture environment).

To perfectly capture the colorimetry of a scene, the spectral sensitivities of the capture device should match the spectral sensitivities of the viewer. In practice, these often do not match exactly but are instead approximated using a 3x3 matrix transform to convert sensor sensitivities to some set of desired RGB primaries. Approximation of the sensor sensitivities is a source of lossiness. To avoid this contribution to lossiness, the camera spectral sensitivities as well as the 3x3 matrix transformation that were applied can be transmitted with the content, allowing a playback device to either apply, or invert, the conversion from sensor output to specified RGB primaries.

Once the desired RGB makeup of the image is determined, the values may be conformed to a specified reference white point. The image may be conformed to one of the standardized white points (D50, D65, etc.) through, for example, the Von Kries adaptation transformation. This process involves (a) estimating the capture environment surround illuminance and white point and (b) applying a correction to the image to achieve a color match for an observer in a specified reference viewing environment (e.g., an environment with a known white point and surround illumination). A methodology employable for adjusting images to suit the observer's state of adaptation in a chromatic ambient surround is outlined in PCT Application No. PCT/US2021/027826, filed April 16, 2021, and in PCT Application No. PCT/US2021/029476, filed April 27, 2021.

At step 204, one or more source appearance adjustments can be applied to the captured image including, but not limited to, white balance adjustments, color correction adjustments, optical-optical transfer function (OOTF) adjustments. Step 204 may include calculating a non-linear optical-optical transfer function (OOTF) to map from the measured capture surround luminance to a reference reviewing environment. The order of the white point adjustment and the 3x3 matrix may vary. Calculation and application of the optical-optical transfer function (OOTF) may establish an image's rendering intent on standard display devices. In practice, the OOTF is applied to map the image from the viewing environment at capture to display in the reference viewing environment. Application of the OOTF can be a lossy operation, which can make inversion of the OOTF at playback difficult. As with the white point adjustment, in a first step (a) the surround illuminance of the capture environment can be estimated and in a second step (b) the image can be corrected to achieve a match for an observer in a reference environment.

At step 206, one or more source preference adjustments can be applied to the captured image including, but not limited to, contrast adjustments, color saturation adjustments including overall color saturation adjustments and/or individual color saturation adjustments, slope-offset-power-Tmid adjustments in the tone curve, and other tone curve trims and adjustments. As used herein, "mid" refers to the average, in a perceptually quantized (PQ) encoded image, of the maxRGB values of the image, where each pixel has its own maxRGB value that is equal to that pixel's greatest color component value (R, G, or B). In other words, whichever color component of a pixel has the greatest value, is the maxRGB value for that pixel and the average of the maxRGB values across a PQ-encoded image is the image's "mid." "T-mid" may refer to a "target mid," which may be the "mid" value that a user or content creator desires in the final image. In some embodiments, the individual color saturation adjustments may include saturation adjustments in 6 different colors, which may be referred to as "six-vector adjustments."

Modification of the captured image at steps 204 and 206 yields a source-adjusted image 207. A source rendering intent 203 can specify source appearance adjustments to be applied at 204 and/or source preference adjustments to be applied at 206 to produce the source-adjusted image 207. The source rendering intent 203 can be indicated by a selection received from a user, where that selection of intent specifies what source appearance and source preference adjustments are made, the coefficients of such adjustments, what portions of the image the adjustments are applied to, etc. Alternatively, the source rendering intent 203 can constitute a default rendering intent, or can represent a combination of both, such that it reflects both user-specified adjustments and default adjustments.

It is common practice for OEMs or software applications to apply source preference adjustments to captured images. These alterations are purely aesthetic and typically put in place to render images with higher levels of contrast and color saturation. In various embodiments of the present disclosures, these preference alterations determined by the OEM are transmitted as metadata with the content and applied at playback in the same manner as the source appearance metadata. In each case there is a first step (a) of calculating or specifying the desired amount of correction to apply and (b) applying the correction using a parameterized function. Both (a) and (b) are transmitted as metadata, allowing a playback device to have full flexibility of rendering either a "pleasing" or "reality" image, and allowing full flexibility of the capture device of transmitting either a "pleasing" or "reality" image.

As described herein, one benefit of the various embodiments disclosed herein is that all adjustments to the three-channel image can be encoded as metadata and sent alongside the content to the playback device for application. In one embodiment, the OEM or encoding device can decide to apply no adjustments for both appearance and preference in order to produce a "reality" image.

At step 208, the source-adjusted image may be encoded. Step 208 may include encoding the source-adjusted image 207 for delivering downstream to decoding and playback devices such as computer monitors, television sets, set-top boxes, movie theaters, and the like. In some embodiments, encoding step 208 may include audio and video encoders, such as those defined by ATSC, DVB, DVD, Blu-Ray, and other delivery formats, to generate a coded bit stream.

In addition to encoding the source-adjusted image 207, step 208 may include creating and/or encoding metadata that characterizes the source appearance adjustments applied in step 204 and the source preference adjustments applied in step 206 (if any). The metadata may include metadata associated with the source appearance adjustments such as scene white point, specified in x,y coordinates (or some other system); scene surround brightness (e.g., information about the estimated capture environment), specified in lux (or some other system); coefficients of white point adjustment matrix that was applied; coefficients of 3x3 color matrix that was applied, coefficients of parameterized OOTF that was applied; the spectral sensitivities of the sensor used to calculate the 3x3 matrix; and coefficients or other information for other enhancements that are applied in step 204. Additionally, the metadata may include metadata associated with the source preference adjustments such as coefficients for contrast enhancements, such as slope-offset-power-Tmid contrast adjustments; coefficients for saturation enhancements; coefficients for individual color saturation adjustments; coefficients for tone curve trims; and coefficients for other enhancements that are applied in step 206.

If the metadata indicates source appearance and/or preference adjustments applied in steps 204 and/or 206, it can include information facilitating inversion (or approximate inversion) of functions applied in conjunction with such adjustments. The metadata can include information indicating the order in which source appearance and/or preference adjustments were applied in steps 204 and/or 206. If no adjustments were made at steps 204 and/or 206, the metadata can indicate that no source appearance adjustments and/or preference adjustments have been made.

At step 210, the encoded source-adjusted image 207 and metadata may be decoded. The source rendering intent 203 associated with the adjustments applied at steps 204 and 206 can then be compared to a target rendering intent 216. The target rendering intent 216 can specify target appearance adjustments and/or preference adjustments. The target rendering intent 216 can be indicated by a selection received from a user, where that selection of intent specifies what target appearance and target preference adjustments are made, the coefficients of such adjustments, what portions of the image the adjustments are applied to, etc. Alternatively, the target rendering intent 216 can constitute a default rendering intent, or a desired rendering intent indicated by the metadata. In some implementations, the target rendering intent 216 can represent a combination of both, such that it reflects both user-specified adjustments and adjustments associated with a default rendering intent and/or a desired rendering intent indicated by the metadata. In an example, the target rendering intent 216 can represent a combination of user-specified appearance adjustments and default preference adjustments.

If the target rendering intent 216 differs from the source rendering intent 203 - that is, if the target appearance adjustments and/or preference adjustments differ from the source appearance adjustments and/or preference adjustments - a series of steps can be performed to convert the source-adjusted image 207 from the source rendering intent 203 to the target rendering intent 216. These steps can generally involve converting the source-adjusted image 207 to a reality-render image 215, and then converting the reality-render image 215 to a target-adjusted image 219.

The source-adjusted image 207 can be converted to a reality-render image 215 via operations performed at steps 212 and/or 214 to undo adjustments performed at steps 206 and/or 204 (in conjunction with application of the source rendering intent 203). The reality-render image 215 can correspond to the image captured at step 202, and can represent "reality" as captured by the imaging sensor. At step 212, the metadata obtained at step 210 can be used to calculate inverted source preference adjustments. When applied to the source-adjusted image 207, the inverted source preference adjustments of step 212 can undo some or all of the source preference adjustments of step 206. At step 214, the metadata obtained at step 210 can be used to calculate inverted source appearance adjustments. When applied to the source-adjusted image 207, the inverted source appearance adjustments of step 214 can undo some or all of the source appearance adjustments of step 204. Based on the metadata obtained at step 210, the order in which source appearance and/or preference adjustments were applied in steps 204 and/or 206 can be determined. This order can then be reversed in conjunction with applying the inverted source preference and/or appearance adjustments at steps 212 and/or 214.

The reality-render image 215 can be converted to the target-adjusted image 219 via operations performed at steps 217 and/or 218. At step 217, target appearance adjustments may be calculated and applied. The target appearance adjustments may include, as non-liming examples, measuring a display surround luminance (e.g., a level of ambient light in the display environment) and then calculating and applying a non-linear optical-optical transfer function (OOTF) to map from the reference viewing environment to the measured display surround luminance (e.g., the actual viewing environment). At step 218, target preference adjustments may be calculated and applied. The target preference adjustments may include, as non-liming examples, contrast adjustments, color saturation adjustments, slope-offset-power-Tmid adjustments, individual color saturation adjustments, and tone curve trims. In some implementations, inverting the source adjustments and applying the target adjustments can be combined into a single processing step, and the adjustments can be calculated accordingly. In other words, some or all of steps 212, 214, 217, and 218 can be combined.

In some implementations, the source rendering intent 203 can correspond to reality-rendering, and steps 204 and 206 can be essentially bypassed. In such implementations, a reality-render image - the image captured at step 202 - can serve as the source-adjusted image 207 encoded at step 208, and the metadata encoded at step 208 can indicate that no source appearance adjustments and no source preference adjustments were made. Based on the metatdata, a decoding entity can recognize that the source-adjusted image 207 is a reality-render image, and steps 212 and 214 can be essentially bypassed. Similarly, in some implementations, the target rendering intent 216 can correspond to reality-rendering, and steps 217 and 218 can be essentially bypassed, such that a reality-render image serves as the target-adjusted image 219.

The target-adjusted image 219 can be rendered at step 220. As examples, the target-adjusted image 219 may be projected, displayed, saved to storage, transmitted to another device, or otherwise utilized.

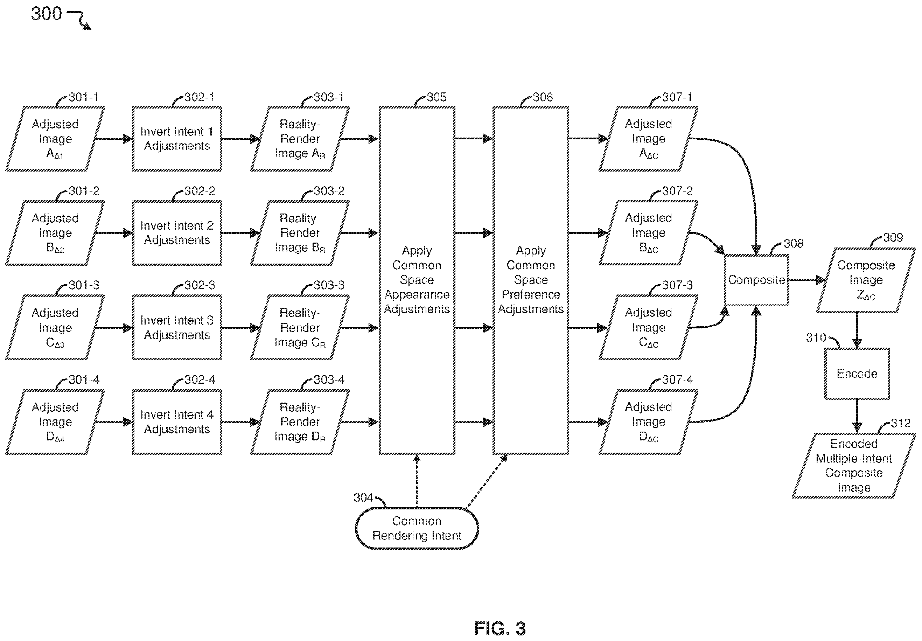

FIG. 3 illustrates an example process 300. According to process 300, a composite image can be created based on a set of constituent images that have been adjusted to apply differing respective rendering intents. In the example depicted in FIG. 3, the set of constituent images comprises adjusted images 301-1, 301-2, 301-3, and 301-4. It is to be appreciated that process 300 can involve creating a composite image based on a lesser or greater number of constituent images in various implementations.

The adjusted images 301-1, 301-2, 301-3, and 301-4 represent captured images A, B, C, and D that have been adjusted (e.g., via appearance adjustments and/or preference adjustments such as those at steps 204 and 206 of FIG. 2) to implement rendering intents 1, 2, 3, and 4, respectively. At steps 302-1, 302-2, 302-3, and 302-4, inverse adjustments can be applied to adjusted images 301-1, 301-2, 301-3, and 301-4, respectively, to undo previously-applied adjustments associated with their present rendering intents (rendering intents 1, 2, 3, and 4). These inverse adjustments can include inverse preference adjustments to undo previously-applied preference adjustments, inverse appearance adjustments to undo previously-applied appearance adjustments, or both. In cases in which both types of inverse adjustments are performed, the inverse preference adjustments can be conducted first, followed by the inverse source adjustments.

The inverse adjustments performed at 302-1, 302-2, 302-3, and 302-4 to adjusted images 301-1, 301-2, 301-3, and 301-4 can yield respective reality-render images 303-1, 303-2, 303-3, and 303-4. The reality-render images 303-1, 303-2, 303-3, and 303-4 can then be converted to a common rendering intent 304. In some implementations, the common rendering intent 304 to be applied can be user-specified, or can be a default rendering intent. In some implementations, the common rendering intent 304 to be applied can be selected from among multiple candidate rendering intents. In some implementations, such candidate rendering intents can be statically predesignated. In other implementations, such candidate rendering intents can be dynamically identified during execution of process 300.

In some implementations, the common rendering intent 304 can match a rendering intent of one or more of the set of constituent images (adjusted images 301-1, 301-2, 301-3, and 301-4). In some implementations, for instance, the common rendering intent 304 can be selected from among the rendering intents of the set of constituent images, such as based on the relative importance of each constituent image. In an example, adjusted image 301-1 can be identified as a most important one of the set of constituent images, and rendering intent 1 can thus be selected as the common rendering intent 304.

The relative importances of the various constituent images in the set can be determined based on one or more factors. In some implementations, the factor(s) can include the relative sizes of the constituent images in the rendered space of the composite image to be created. For instance, a largest constituent image can be identified as the most important one of the constituent images. In some implementations, the factor(s) can include the respective resolutions of the constituent images. For instance, a highest-resolution constituent image can be identified as the most important one of the constituent images.

In some implementations, the factor(s) can include characteristics relating to the relative prominence of the constituent images in the rendered space. For example, a most central constituent image can be identified as the most important one of the constituent images. In another example, gaze detection can be used to identify a point of viewer focus within the rendered space, and a constituent image within which that point resides can be identified as the most important one of the constituent images. In some implementations, any of the aforementioned factors may be considered in combination in conjunction with determining the relative importances of the constituent images. In some implementations, other factor(s) may be considered in addition to - or in lieu of - any or all of the aforementioned factors in conjunction with determining the relative importances of the constituent images.

In some implementations, a rendering intent exhibited by multiple constituent images can be selected as the common rendering intent 304. For instance, if a plurality of, a majority of, or all of the constituent images are of a same rendering intent, that rendering intent can be selected as the common rendering intent 304.

Via common space adjustments performed at steps 305 and/or 306, the common rendering intent 304 can be applied to reality-render images 303-1, 303-2, 303-3, and 303-4, to obtain respective adjusted images 307-1, 307-2, 307-3, and 307-4. At step 305, common space appearance adjustments may be calculated and applied. The common space appearance adjustments may include, as a non-liming example, applying a non-linear optical-optical transfer function (OOTF) to map from one reference viewing environment to another reference viewing environment or an actual viewing environment. At step 306, common space preference adjustments may be calculated and applied. The common space preference adjustments may include, as non-liming examples, contrast adjustments, color saturation adjustments, slope-offset-power-Tmid adjustments, individual color saturation adjustments, and tone curve trims.

At step 308, a compositing procedure may be utilized to create a composite image 309 based on adjusted images 307-1, 307-2, 307-3, and 307-4. At step 310, the composite image 309 and metadata characterizing the common rendering intent 304 can be encoded to create an encoded multiple-intent composite image 312.

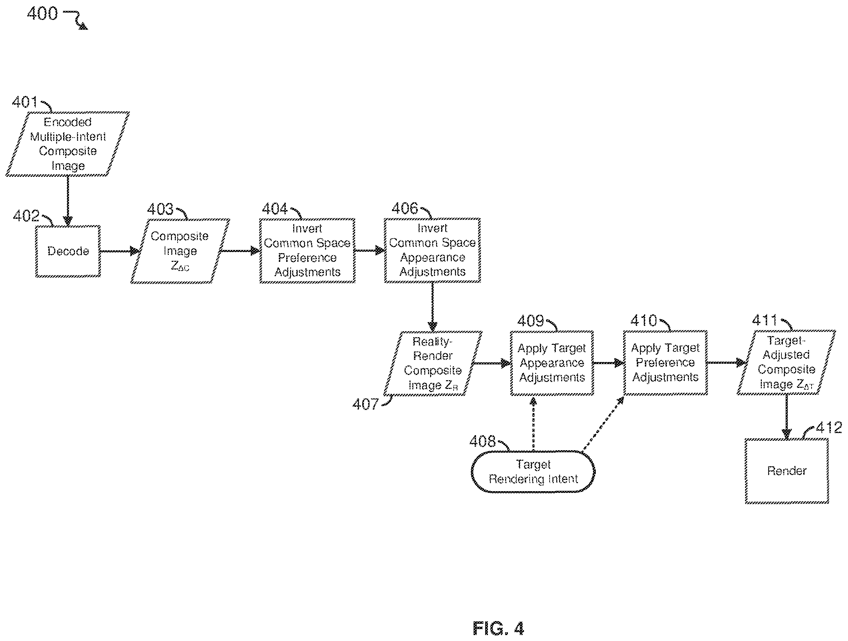

FIG. 4 illustrates an example process 400. According to process 400, an encoded multiple-intent composite image 401 (such as may be created via process 300 of FIG. 3) can be decoded at step 402 to obtain a composite image 403 and metadata indicating a common rendering intent of a set of images based on which the composite image 403 was created. The metadata can describe one or more common space adjustments applied to one or more of those images. The common rendering intent can be compared to a target rendering intent 408, which can specify target appearance adjustments and/or preference adjustments. The target rendering intent 408 can be indicated by a selection received from a user, where that selection of intent specifies what target appearance and target preference adjustments are made, the coefficients of such adjustments, what portions of the image the adjustments are applied to, etc. Alternatively, the target rendering intent 408 can constitute a default rendering intent, or a desired rendering intent indicated by the metadata. In some implementations, the target rendering intent 408 can represent a combination of both, such that it reflects both user-specified adjustments and adjustments associated with a default rendering intent and/or a desired rendering intent indicated by the metadata. In an example, the target rendering intent 408 can represent a combination of user-specified appearance adjustments and default preference adjustments.

If the target rendering intent 408 differs from the common rendering intent, a series of steps can be performed to convert the composite image 403 from the common rendering intent to the target rendering intent 408. These steps can generally involve converting the composite image 403 to a reality-render composite image 407, and then converting the reality-render composite image 407 to a target-adjusted composite image 411.

The composite image 403 can be converted to a reality-render composite image 417 via operations performed at steps 404 and/or 406. At step 404, the metadata obtained at step 402 can be used to calculate inverted common space preference adjustments. The inverted common space preference adjustments of step 404 can undo one or more common space preference adjustments applied (e.g., at step 305 of FIG. 3) in conjunction with creation of the composite image 403. At step 406, the metadata obtained at step 402 can be used to calculate inverted common space appearance adjustments. The inverted common space appearance adjustments of step 406 can undo one or more common space appearance adjustments applied (e.g., at step 306 of FIG. 3) in conjunction with creation of the composite image 403.

The reality-render composite image 407 can be converted to the target-adjusted composite image 411 via operations performed at steps 409 and/or 410. At step 409, target appearance adjustments may be calculated and applied. The target appearance adjustments may include, as non-liming examples, measuring a display surround luminance (e.g., a level of ambient light in the display environment) and then calculating and applying a non-linear optical-optical transfer function (OOTF) to map from the reference viewing environment to the measured display surround luminance (e.g., the actual viewing environment). At step 410, target preference adjustments may be calculated and applied. The target preference adjustments may include, as non-liming examples, contrast adjustments, color saturation adjustments, slope-offset-power-Tmid adjustments, individual color saturation adjustments, and tone curve trims. In some implementations, inverting the common space adjustments and applying the target adjustments can be combined into a single processing step, and the adjustments can be calculated accordingly. In other words, some or all of steps 404, 406, 409, and 410 can be combined.

The target-adjusted composite image 411 can be rendered at step 412. As examples, the target-adjusted composite image 411 may be projected, displayed, saved to storage, transmitted to another device, or otherwise utilized.

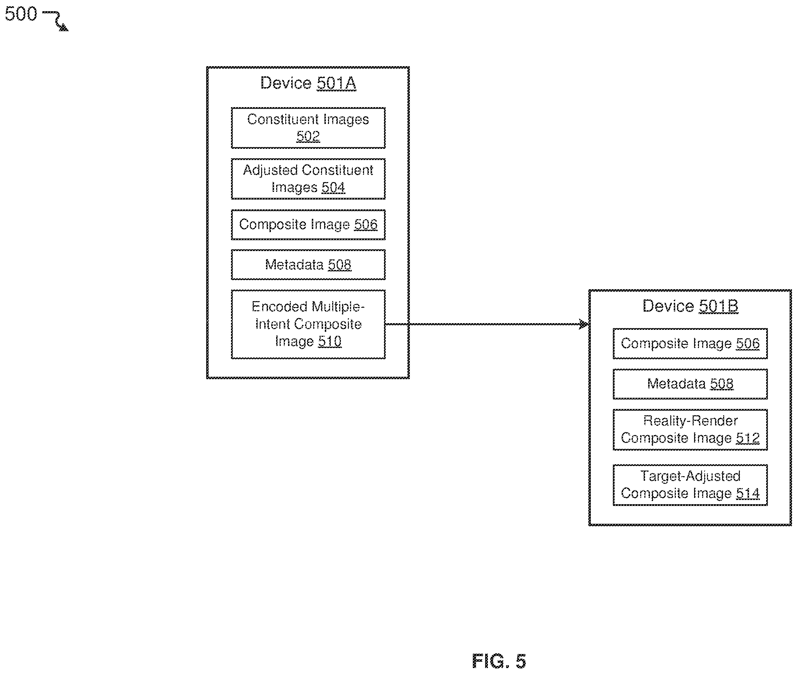

FIG. 5 illustrates an example operating environment 500 in which multiple-intent composite image encoding and rendering may be conducted according to aspects of the disclosure. In operating environment 500, a device 501A can (e.g., using a process such as process 300 of FIG. 3) create an encoded multiple-intent composite image 510 and deliver it to a device 501B, which can (e.g., using a process such as process 400 of FIG. 4) process the encoded multiple-intent composite image 510 to create a target-adjusted composite image 514.

Device 501A can obtain a set of constituent images 502 (e.g., adjusted images 301-1, 301-2, 301-3, and 301-4 of FIG. 3) and can determine a common rendering intent to be applied to the set of constituent images 502. According to some implementations, determining the common rendering intent can involve identifying a preferred rendering intent as the common rendering intent. In some implementations, the preferred rendering intent can be identified based on input received via a user interface or information in a configuration file. In some implementations, the preferred rendering intent can be identified based on a combination of both. For instance, input may be received that identifies a constituent image, the rendering intent of which constitutes the preferred rendering intent, and a configuration file may be accessed in order to identify the rendering intent of the identified constituent image. In some implementations, device 501A can select the common rendering intent from among multiple candidate rendering intents. In some implementations, such candidate rendering intents can be statically predesignated. In other implementations, such candidate rendering intents can be dynamically identified.

In some implementations, device 501A can select a common rendering intent that matches a rendering intent of one or more of the set of constituent images 502. In some implementations, for example, device 501A can select a present rendering intent of a constituent image 502 (e.g., based on a relative importance of that constituent image 502) as the common rendering intent. In some implementations, device 501A can select a present rendering intent shared by a plurality of, a majority of, or all of the set of constituent images 502.

Device 501A can adjust one or more of the set of constituent images 502 according to the common rendering intent to obtain an adjusted set of constituent images 504. This can involve converting one or more of the set of constituent images 502 from a present rendering intent to the common rendering intent. Converting from the present rendering intent to the common rendering intent can include inverting one or more source adjustments to obtain reality-render images (e.g., reality-render images 303-1, 303-2, 303-3, and 303-4 of FIG. 3) and applying one or more common space adjustments to the reality-render images to obtain the adjusted set of constituent images 504 (e.g., adjusted images 307-1, 307-2, 307-3, and 307-4 of FIG. 3).

In some implementations, applying the one or more common space adjustments can include one or more of: converting sensor values to color values, estimating a capture environment surround luminance and white point and applying a white point correction based on the estimated capture environment surround luminance and white point, estimating a capture environment surround luminance and applying an optical-optical transfer function (OOTF) to prepare the image for rendering on a reference display device based in part on the estimated capture environment surround luminance. In some implementations, applying the one or more common space adjustments can include applying one or more of a saturation enhancement, a contrast enhancement, individual color saturation adjustments, a slope-offset-power-Tmid enhancement, and tone curve trims. In some implementations, applying the one or more common space adjustments can include converting a constituent image 502 from a preprocessed state to the common rendering intent.

Device 501A can use a compositing procedure to create a composite image 506 (e.g., composite image 309 of FIG. 3) based on the adjusted set of constituent images 504. Device 501A can then encode the composite image 506 with metadata 508 to create the encoded multiple-intent composite image 510. Metadata 508 can indicate the common rendering intent applied to the set of constituent images 502 in conjunction with the creation of composite image 506.

Device 501B can receive encoded multiple-intent composite image 510 from device 501A, and can decode encoded multiple-intent composite image 510 to obtain composite image 506 and metadata 508, which can describe one or more common space adjustments applied in creating composite image 506. Device 501B can adjust composite image 506 to invert the one or more common space adjustments to obtain a reality-render composite image 512 (e.g., reality-render composite image 407 of FIG. 4). Device 501B can then adjust the reality-render composite image 512 according to a target rendering intent to obtain a target-adjusted composite image 514 (e.g., target-adjusted composite image 411 of FIG. 4), and can display, project, save (to storage), transmit (to another device), or otherwise utilize the target-adjusted composite image 514. In some implementations, the target rendering intent can be identified based on one or both of input received via a user interface and information in a configuration file.

In some implementations, adjusting reality-render composite image 512 according to the target rendering intent can include applying one or more target adjustments to reality-render composite image 512. In some implementations, applying the one more target adjustments can include estimating a capture environment surround luminance and white point and applying a white point correction based on the estimated capture environment surround luminance and white point. In some implementations, applying the one more target adjustments can include estimating a capture environment surround luminance and applying an optical-optical transfer function (OOTF) to prepare the image for rendering on a reference display device based in part on the estimated capture environment surround luminance. In some implementations, applying the one more target adjustments can include applying one or more of a saturation enhancement, a contrast enhancement, individual color saturation adjustments, a slope-offset-power-Tmid enhancement, and tone curve trims.

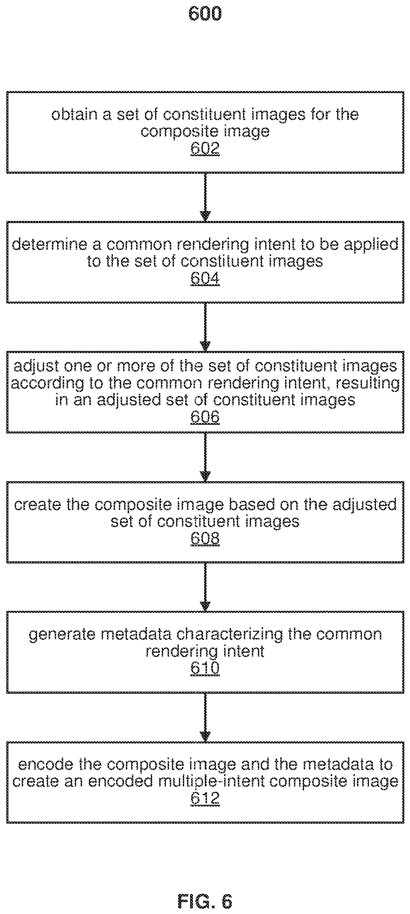

FIG. 6 illustrates an example method 600 of encoding a composite image according to aspects of the disclosure. Method 600 may be representative of operations that may be performed by device 501A in operating environment 500 of FIG. 5 and/or by the example apparatus 800 described below according to some implementations.

According to method 600, a set of constituent images may be obtained at 602 for use to create a composite image. For example, in operating environment 500 of FIG. 5, device 501A may obtain constituent images 502. At 604, a common rendering intent to be applied to the set of constituent images may be determined. For example, in operating environment 500 of FIG. 5, device 501A may determine a common rendering intent to be applied to constituent images 502. At 606, one or more of the set of constituent images may be adjusted according to the common rendering intent, resulting in an adjusted set of constituent images. For example, in operating environment 500 of FIG. 5, device 501A may adjust one or more of constituent images 502 to obtain adjusted constituent images 504.

At 608, the composite image may be created based on the adjusted set of constituent images. For example, in operating environment 500 of FIG. 5, device 501A may create composite image 506 based on adjusted constituent images 504. At 610, metadata may be generated that characterizes the common rendering intent. For example, in operating environment 500 of FIG. 5, device 501A may generate metadata 508, which may characterize a common rendering intent applied to constituent images 502. At 612, the composite image and the metadata may be encoded to create an encoded multiple-intent composite image. For example, in operating environment 500 of FIG. 5, device 501A may encode composite image 506 and metadata 508 to create encoded multiple-intent composite image 510.

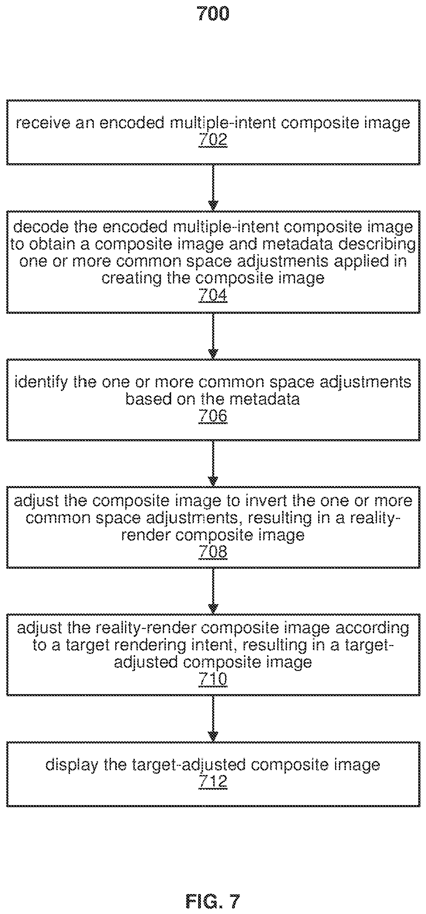

FIG. 7 illustrates an example method 700 of rendering a composite image according to aspects of the disclosure. Method 700 may be representative of operations that may be performed by device 501B in operating environment 500 of FIG. 5 and/or by the example apparatus 800 described below according to some implementations.

According to method 700, an encoded multiple-intent composite image may be received at 702. For example, in operating environment 500 of FIG. 5, device 501B may receive encoded multiple-intent composite image 510 from device 501A. At 704, the encoded multiple-intent composite image may be decoded to obtain a composite image and metadata describing one or more common space adjustments applied in creating the composite image. For example, in operating environment 500 of FIG. 5, device 501B may decode encoded multiple-intent composite image 510 to obtain composite image 506 and metadata 508, and metadata 508 may describe one or more common space adjustments applied in creating composite image 506. At 706, the one or more common space adjustments may be identified based on the metadata. For example, in operating environment 500 of FIG. 5, device 501B may identify, based on metadata 508, one or more common space adjustments applied in creating composite image 506.

At 708, the composite image may be adjusted to invert the one or more common space adjustments identified at 706, resulting in a reality-render composite image. For example, in operating environment 500 of FIG. 5, device 501B may adjust composite image 506 to invert one or more common space adjustments identified based on metadata 508, to obtain reality-render composite image 512. At 710, the reality-render composite image may be adjusted according to a target rendering intent, resulting in a target-adjusted composite image. For example, in operating environment 500 of FIG. 5, device 501B may adjust reality-render composite image 512 based on a target rendering intent, to obtain target-adjusted composite image 514. At 712, the target-adjusted composite image may be displayed. For example, in operating environment 500 of FIG. 5, device 501B may render the target-adjusted composite image on a display.

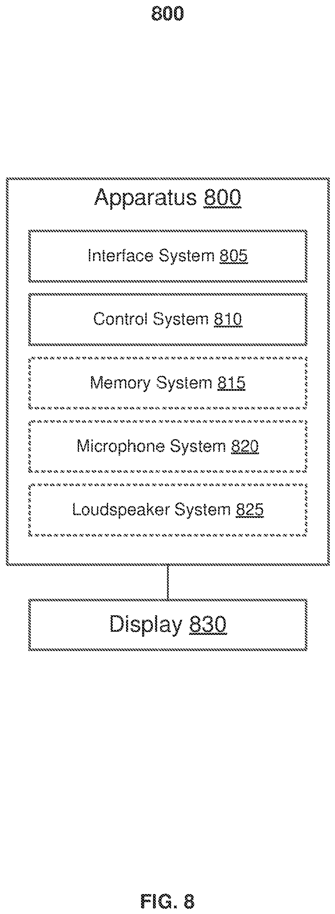

FIG. 8 is a block diagram that shows examples of components of an apparatus 800 capable of implementing various aspects of this disclosure. According to some aspects of the disclosure, apparatus 800 can be capable of implementing operations performed by one or both of devices 501A and 501B in operating environment 500 of FIG. 5. According to some aspects of the disclosure, apparatus 800 can be capable of implementing operations associated with one or both of method 600 of FIG. 6 and method 700 of FIG. 7. As with other figures provided herein, the types and numbers of elements shown in FIG. 8 are merely provided by way of example. Other implementations may include more, fewer and/or different types and numbers of elements. According to some examples, the apparatus 800 may be configured for performing at least some of the methods disclosed herein. In some implementations, the apparatus 800 may be, or may include, a television, one or more components of an audio, video, or multimedia system, a mobile device (such as a cellular telephone), a laptop computer, a tablet device, a smart speaker, or another type of device.

According to some implementations the apparatus 800 may be, or may include, a server. In some such examples, the apparatus 800 may be, or may include, an encoder. In some implementations the apparatus 800 may be a device that is configured for use within an audio, video, or multimedia environment, such as a home audio, video, or multimedia environment, whereas in other instances the apparatus 800 may be a device that is configured for use in "the cloud," e.g., a server.

In this example, the apparatus 800 includes an interface system 805 and a control system 810. The interface system 805 may, in some implementations, be configured for communication with one or more other devices of an audio, video, or multimedia environment. The audio, video, or multimedia environment may, in some examples, be a home audio, video, or multimedia environment. In other examples, the audio, video, or multimedia environment may be another type of environment, such as an office environment, an automobile environment, a train environment, a street or sidewalk environment, a park environment, etc. The interface system 805 may, in some implementations, be configured for exchanging control information and associated data with audio, video, or multimedia devices of the audio, video, or multimedia environment. The control information and associated data may, in some examples, pertain to one or more software applications that the apparatus 800 is executing.

The interface system 805 may, in some implementations, be configured for receiving, or for providing, a content stream. The content stream may include audio, video, or multimedia data. The audio, video, or multimedia data may include, but may not be limited to, audio, video, or multimedia signals. In some instances, the content stream can include audio data comprising spatial data, such as channel data and/or spatial metadata. In some examples, the content stream may include video data and audio data corresponding to the video data.

The interface system 805 may include one or more network interfaces and/or one or more external device interfaces (such as one or more universal serial bus (USB) interfaces). According to some implementations, the interface system 805 may include one or more wireless interfaces. The interface system 805 may include one or more devices for implementing a user interface, such as one or more microphones, one or more speakers, a display system, a touch sensor system and/or a gesture sensor system. In some examples, the interface system 805 may include one or more interfaces between the control system 810 and a memory system, such as the optional memory system 815 shown in FIG. 8. However, the control system 810 may include a memory system in some instances. The interface system 805 may, in some implementations, be configured for receiving input from one or more microphones in an environment.

The control system 810 may, for example, include a general purpose single- or multi-chip processor, a digital signal processor (DSP), an application specific integrated circuit (ASIC), a field programmable gate array (FPGA) or other programmable logic device, discrete gate or transistor logic, and/or discrete hardware components.

In some implementations, the control system 810 may reside in more than one device. For example, in some implementations a portion of the control system 810 may reside in a device within one of the environments depicted herein and another portion of the control system 810 may reside in a device that is outside the environment, such as a server, a mobile device (e.g., a smartphone or a tablet computer), etc. In other examples, a portion of the control system 810 may reside in a device within one environment and another portion of the control system 810 may reside in one or more other devices of the environment. For example, a portion of the control system 810 may reside in a device that is implementing a cloud-based service, such as a server, and another portion of the control system 810 may reside in another device that is implementing the cloud-based service, such as another server, a memory device, etc. The interface system 805 also may, in some examples, reside in more than one device.

In some implementations, the control system 810 may be configured for performing, at least in part, the methods disclosed herein. According to some examples, the control system 810 may be configured for implementing methods of utilizing an aggressiveness control parameter when training a machine learning model, utilizing an aggressiveness control parameter in post-processing, or the like.

Some or all of the methods described herein may be performed by one or more devices according to instructions (e.g., software) stored on one or more non-transitory media. Such non-transitory media may include memory devices such as those described herein, including but not limited to random access memory (RAM) devices, read-only memory (ROM) devices, etc. The one or more non-transitory media may, for example, reside in the optional memory system 815 shown in FIG. 8 and/or in the control system 810. Accordingly, various innovative aspects of the subject matter described in this disclosure can be implemented in one or more non-transitory media having software stored thereon. The software may, for example, include instructions for utilizing an aggressiveness control parameter when training a machine learning model, utilizing an aggressiveness control parameter in post-processing, etc. The software may, for example, be executable by one or more components of a control system such as the control system 810 of FIG. 8.

In some examples, the apparatus 800 may include the optional microphone system 820 shown in FIG. 8. The optional microphone system 820 may include one or more microphones. In some implementations, one or more of the microphones may be part of, or associated with, another device, such as a speaker of the speaker system, a smart audio, video, or multimedia device, etc. In some examples, the apparatus 800 may not include a microphone system 820. However, in some such implementations the apparatus 800 may nonetheless be configured to receive microphone data for one or more microphones in an audio, video, or multimedia environment via the interface system 810. In some such implementations, a cloud-based implementation of the apparatus 800 may be configured to receive microphone data, or a noise metric corresponding at least in part to the microphone data, from one or more microphones in an audio, video, or multimedia environment via the interface system 810.

According to some implementations, the apparatus 800 may include the optional loudspeaker system 825 shown in FIG. 8. The optional loudspeaker system 825 may include one or more loudspeakers, which also may be referred to herein as "speakers" or, more generally, as "audio reproduction transducers." In some examples (e.g., cloud-based implementations), the apparatus 800 may not include a loudspeaker system 825. In some implementations, the apparatus 800 may include headphones. Headphones may be connected or coupled to the apparatus 800 via a headphone jack or via a wireless connection (e.g., Bluetooth).

According to some implementations, apparatus 800 can include or be coupled with a display 830. Display 830 can comprise a display device capable of displaying visual information, content, and/or effects, such as, for example, target-adjusted composite image 411 of FIG. 4. Examples of display 830 can include, without limitation, a television, a monitor, a laptop computer screen, a projector, and a touchscreen.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments incorporate more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

The above systems and methods may provide for encoding and rendering multiple-intent composited images.

Various features and advantages of the embodiments described herein are set forth in the following claims.

## Claims

1. A method (600) of encoding a composite image (506), the method (600) comprising:
obtaining (602) a set of constituent images (502) for the composite image (506), the set of constituent images (502) comprising captured images as captured by an imaging sensor which have been adjusted to implement differing respective rendering intents;
applying inverse adjustments to the set of constituent images (502) to undo the previously-applied adjustments to implement the differing respective rendering intents and obtain respective reality-render images corresponding to the captured images as captured by the imaging sensor;
determining (604) a common rendering intent to be applied to the set of reality-render images;
adjusting (606) one or more of the set of reality-render images according to the common rendering intent, resulting in an adjusted set of constituent images (504);
creating (608) the composite image (506) based on the adjusted set of constituent images (504);
generating (610) metadata (508) characterizing the common rendering intent; and
encoding (612) the composite image (506) and the metadata (508) to create an encoded multiple-intent composite image (510).

2. The method of claim 1, wherein adjusting (606) one or more of the set of reality-render images according to the common rendering intent includes converting a constituent image among the set of constituent images (502) from a present rendering intent to the common rendering intent.

3. The method (600) of claim 2, wherein converting the constituent image among the set of constituent images (502) from the present rendering intent to the common rendering intent includes:
inverting one or more source adjustments of the constituent image; and
applying one or more common space adjustments to the constituent image.

4. The method (600) of claim 3, wherein applying the one or more common space adjustments to the constituent image includes converting sensor values to color values.

5. The method (600) of claim 3 or claim 4, wherein applying the one or more common space adjustments to the constituent image includes estimating a capture environment surround luminance and white point and applying a white point correction based on the estimated capture environment surround luminance and white point.

6. The method (600) of any one of claims 3 to 5, wherein applying the one or more common space adjustments to the constituent image includes estimating a capture environment surround luminance and applying an optical-optical transfer function - OOTF - to prepare the image for rendering on a reference display device based in part on the estimated capture environment surround luminance.

7. The method (600) of any one of claims 3 to 6, wherein applying the one or more common space adjustments to the constituent image includes applying one or more of:
a saturation enhancement;
a contrast enhancement;
individual color saturation adjustments;
a slope-offset-power-Tmid enhancement; and
tone curve trims.

8. The method (600) of any one of claims 1 to 7, wherein adjusting one or more of the set of constituent images (502) according to the common rendering intent includes converting a constituent image among the set of constituent images (502) from a preprocessed state to the common rendering intent.

9. The method (600) of any one of claims 1 to 8, wherein adjusting one or more of the set of constituent images (502) according to the common rendering intent includes:
converting a first constituent image among the set of constituent images (502) from a first present rendering intent to the common rendering intent; and
converting a second constituent image among the set of constituent images (502) from a second present rendering intent to the common rendering intent.

10. The method (600) of any one of claims 1 to 9, wherein determining (604) the common rendering intent includes selecting, as the common rendering intent, a present rendering intent of a constituent image among the set of constituent images (502).

11. The method (600) of claim 10 further comprising selecting the present rendering intent of the constituent image as the common rendering intent based on an importance of the constituent image relative to other constituent images of the set of constituent images (502), wherein the importance of the constituent image is determined based on one or more of:
a relative size of the constituent image in a rendered space of the composite image (506);
a resolution of the constituent image;
a centrality of a location of the constituent image in the rendered space of the composite image (506); and
a point of viewer focus in the rendered space of the composite image.

12. The method (600) of any one of claims 1 to 9, wherein determining (604) the common rendering intent includes identifying a preferred rendering intent as the common rendering intent.

13. The method (600) of claim 12 further comprising identifying the preferred rendering intent based on one or both of:
input received via a user interface; and
information in a configuration file.

14. An apparatus (501A, 800) configured to perform the method (600) of any one of claims 1 to 13.

15. A computer-readable medium having stored therein instructions that, when executed by one or more processors, cause the one or more processors to perform the method (600) of any one of claims 1 to 13.

## Patentansprüche

1. Verfahren (600) zum Codieren eines zusammengesetzten Bildes (506), wobei das Verfahren (600) Folgendes umfasst:
Erhalten (602) eines Satzes von Teilbildern (502) für das zusammengesetzte Bild (506), wobei der Satz von Teilbildern (502) aufgenommene Bildern umfasst, wie sie von einem Bildsensor aufgenommen wurden und so angepasst sind, dass sie jeweilige unterschiedliche Wiedergabeabsichten umsetzen;
Anwenden inverser Anpassungen auf den Satz von Teilbildern (502), um die zuvor angewendeten Anpassungen rückgängig zu machen, um die unterschiedlichen jeweiligen Wiedergabeabsichten umzusetzen und entsprechende Realitätswiedergabebilder zu erhalten, die den vom Bildsensor aufgenommenen Bildern entsprechen;
Bestimmen (604) einer gemeinsamen Wiedergabeabsicht, die auf den Satz von Realitätswiedergabebildern angewendet werden soll;
Anpassen (606) eines oder mehrerer Bilder des Satzes von Realitätswiedergabebildern gemäß der gemeinsamen Wiedergabeabsicht, woraus ein angepasster Satz von Teilbildern (504) resultiert;
Erstellen (608) des zusammengesetzten Bildes (506) basierend auf dem angepassten Satz von Teilbildern (504);
Erzeugen (610) von Metadaten (508), die die gemeinsame Wiedergabeabsicht charakterisieren; und
Codieren (612) des zusammengesetzten Bildes (506) und der Metadaten (508), um ein codiertes zusammengesetztes Bild mit mehreren Absichten (510) zu erstellen.

2. Verfahren nach Anspruch 1, wobei Anpassen (606) eines oder mehrerer Bilder des Satzes von Realitätswiedergabebildern gemäß der gemeinsamen Wiedergabeabsicht Konvertieren eines Teilbildes aus dem Satz von Teilbildern (502) von einer aktuellen Wiedergabeabsicht in die gemeinsame Wiedergabeabsicht einschließt.

3. Verfahren (600) nach Anspruch 2, wobei Konvertieren des Teilbildes aus dem Satz von Teilbildern (502) von der aktuellen Wiedergabeabsicht zur gemeinsamen Wiedergabeabsicht Folgendes einschließt:
Umkehren einer oder mehrerer Quellanpassungen des Teilbildes; und
Anwenden einer oder mehrerer gemeinsamer Raumanpassungen auf das Teilbild.

4. Verfahren (600) nach Anspruch 3, wobei Anwenden einer oder mehrerer gemeinsamer Raumanpassungen auf das Teilbild Konvertieren von Sensorwerten in Farbwerte einschließt.

5. Verfahren (600) nach Anspruch 3 oder 4, wobei Anwenden einer oder mehrerer gemeinsamer Raumanpassungen auf das Teilbild Schätzen einer umgebenden Luminanz und eines Weißpunkts einer Aufnahmeumgebung und Anwenden einer Weißpunktkorrektur basierend auf der geschätzten Luminanz und dem Weißpunkt der Aufnahmeumgebung einschließt.

6. Verfahren (600) nach einem der Ansprüche 3 bis 5, wobei Anwenden einer oder mehrerer gemeinsamer Raumanpassungen auf das Teilbild Schätzen einer umgebenden Luminanz der Aufnahmeumgebung und Anwenden einer optisch-optischen Übertragungsfunktion - OOTF - zur Vorbereitung des Bildes für Wiedergabe auf eine Referenzanzeigevorrichtung teilweise basierend auf der geschätzten umgebenden Luminanz der Aufnahmeumgebung einschließt.

7. Verfahren (600) nach einem der Ansprüche 3 bis 6, wobei Anwenden der einen oder mehreren gemeinsamen Raumanpassungen auf das Teilbild Anwenden von einem oder mehrerem von Folgendem einschließt:
einer Sättigungsverstärkung;
einer Kontrastverstärkung;
individueller Farbsättigungsanpassungen;
einer Verbesserung der Steigung-Versatz-Leistung bei mittlerer Temperatur; und
Tonwertkurvenanpassungen.

8. Verfahren (600) nach einem der Ansprüche 1 bis 7, wobei Anpassen eines oder mehrerer Bilder des Satzes von Teilbildern (502) gemäß der gemeinsamen Wiedergabeabsicht Konvertieren eines Teilbildes aus dem Satz von Teilbildern (502) von einem vorverarbeiteten Zustand in die gemeinsame Wiedergabeabsicht einschließt.

9. Verfahren (600) nach einem der Ansprüche 1 bis 8, wobei Anpassen eines oder mehrerer Bilder des Satzes von Teilbildern (502) gemäß der gemeinsamen Wiedergabeabsicht Folgendes einschließt:
Konvertieren eines ersten Teilbildes aus dem Satz von Teilbildern (502) von einer ersten aktuellen Wiedergabeabsicht in die gemeinsame Wiedergabeabsicht; und
Konvertieren eines zweiten Teilbildes aus der dem Satz von Teilbildern (502) von einer zweiten aktuellen Wiedergabeabsicht zur gemeinsamen Wiedergabeabsicht.

10. Verfahren (600) nach einem der Ansprüche 1 bis 9, wobei Bestimmen (604) der gemeinsamen Wiedergabeabsicht Auswählen als die gemeinsame Wiedergabeabsicht einer aktuellen Wiedergabeabsicht eines Teilbildes aus dem Satz von Teilbildern (502) einschließt.

11. Verfahren (600) nach Anspruch 10, weiter umfassend Auswählen der aktuellen Wiedergabeabsicht des Teilbildes als die gemeinsame Wiedergabeabsicht basierend auf der Wichtigkeit des Teilbildes in Bezug auf andere Teilbilder des Satzes von Teilbildern (502), wobei die Wichtigkeit des Teilbildes basierend auf einem oder mehreren von Folgendem bestimmt wird:
einer relativen Größe des Teilbildes im wiedergegebenen Raum des zusammengesetzten Bildes (506);
einer Auflösung des Teilbildes;
einer Zentralität einer Position des Teilbildes im wiedergegebenen Raum des zusammengesetzten Bildes (506); und
einem Fokus eines Betrachterpunkts im wiedergegebenen Raum des zusammengesetzten Bildes.

12. Verfahren (600) nach einem der Ansprüche 1 bis 9, wobei Bestimmen (604) der gemeinsamen Wiedergabeabsicht Identifizieren einer bevorzugten Wiedergabeabsicht als gemeinsame Wiedergabeabsicht einschließt.

13. Verfahren (600) nach Anspruch 12, weiter umfassend Identifizieren der bevorzugten Wiedergabeabsicht basierend auf einem oder beidem von:
Eingabe, die über eine Benutzerschnittstelle empfangen wird; und
Informationen in einer Konfigurationsdatei.

14. Einrichtung (501A, 800), die so konfiguriert ist, dass sie das Verfahren (600) nach einem der Ansprüche 1 bis 13 durchführt.

15. Computerlesbares Medium, das darin Anweisungen gespeichert aufweist, die, wenn sie von einem oder mehreren Prozessoren ausgeführt werden, bewirken, dass der eine oder die mehreren Prozessoren das Verfahren (600) nach einem der Ansprüche 1 bis 13 durchführen.

## Revendications

1. Procédé (600) d'encodage d'une image composite (506), le procédé (600) comprenant :
l'obtention (602) d'un ensemble d'images constitutives (502) pour l'image composite (506), l'ensemble d'images constitutives (502) comprenant des images capturées telles que capturées par un capteur d'imagerie qui ont été ajustées pour mettre en œuvre différentes intentions de rendu respectives ;
l'application d'ajustements inverses à l'ensemble des images constitutives (502) pour annuler les ajustements précédemment appliqués afin de mettre en œuvre les différentes intentions de rendu respectives et d'obtenir des images de rendu de la réalité respectives correspondant aux images capturées telles que capturées par le capteur d'imagerie ;
la détermination (604) d'une intention de rendu commune à appliquer à l'ensemble des images de rendu de la réalité ;
l'ajustement (606) d'une ou plusieurs des images de rendu de la réalité selon l'intention de rendu commune, résultant en un ensemble ajusté d'images constitutives (504) ;
la création (608) de l'image composite (506) sur la base de l'ensemble ajusté d'images constitutives (504) ;
la génération (610) de métadonnées (508) caractérisant l'intention de rendu commune ; et
l'encodage (612) de l'image composite (506) et des métadonnées (508) pour créer une image composite à intentions multiples encodée (510).

2. Procédé selon la revendication 1, dans lequel l'ajustement (606) d'une ou plusieurs images de rendu de la réalité selon l'intention de rendu commune inclut la conversion d'une image constitutive parmi l'ensemble des images constitutives (502) d'une intention de rendu actuelle à l'intention de rendu commune.

3. Procédé (600) selon la revendication 2, dans lequel la conversion de l'image constitutive parmi l'ensemble des images constitutives (502) de l'intention de rendu actuelle à l'intention de rendu commune inclut :
l'inversion d'un ou plusieurs ajustements sources de l'image constitutive ; et
l'application d'un ou plusieurs ajustements d'espace communs à l'image constitutive.

4. Procédé (600) selon la revendication 3, dans lequel l'application d'un ou plusieurs ajustements d'espace communs à l'image constitutive inclut la conversion des valeurs du capteur en valeurs de couleur.

5. Procédé (600) selon la revendication 3 ou la revendication 4, dans lequel l'application d'un ou plusieurs ajustements d'espace communs à l'image constitutive inclut l'estimation de la luminance et du point blanc de l'environnement de capture et l'application d'une correction du point blanc basée sur la luminance et le point blanc estimés de l'environnement de capture.

6. Procédé (600) selon l'une quelconque des revendications 3 à 5, dans lequel l'application d'un ou plusieurs ajustements d'espace communs à l'image constitutive inclut l'estimation d'une luminance de l'environnement de capture et l'application d'une fonction de transfert optique-optique - OOTF - pour préparer l'image en vue du rendu sur un dispositif d'affichage de référence basé en partie sur la luminance estimée de l'environnement de capture.

7. Procédé (600) selon l'une quelconque des revendications 3 à 6, dans lequel l'application d'un ou plusieurs ajustements d'espace communs à l'image constitutive inclut l'application d'un ou plusieurs parmi :
une amélioration de la saturation ;
une amélioration du contraste ;
des ajustements individuels de la saturation des couleurs ;
une amélioration de la puissance Tmid à décalage de pente ; et
des finitions de courbe de tonalité.

8. Procédé (600) selon l'une quelconque des revendications 1 à 7, dans lequel l'ajustement d'une ou plusieurs images constitutives de l'ensemble (502) selon l'intention de rendu commune inclut la conversion d'une image constitutive parmi l'ensemble des images constitutives (502) d'un état prétraité à l'intention de rendu commune.

9. Procédé (600) selon l'une quelconque des revendications 1 à 8, dans lequel l'ajustement d'une ou plusieurs des images constitutives (502) selon l'intention de rendu commune inclut :
la conversion d'une première image constitutive parmi l'ensemble des images constitutives (502) d'une première intention de rendu présente à l'intention de rendu commune ; et
la conversion d'une deuxième image constitutive parmi l'ensemble des images constitutives (502) d'une deuxième intention de rendu présente à l'intention de rendu commune.

10. Procédé (600) selon l'une quelconque des revendications 1 à 9, dans lequel la détermination (604) de l'intention de rendu commune inclut la sélection, comme intention de rendu commune, d'une intention de rendu actuelle d'une image constitutive parmi l'ensemble des images constitutives (502).

11. Procédé (600) selon la revendication 10 comprenant en outre la sélection de l'intention de rendu actuelle de l'image constitutive comme intention de rendu commune en fonction de l'importance de l'image constitutive par rapport aux autres images constitutives de l'ensemble d'images constitutives (502), dans lequel l'importance de l'image constitutive est déterminée en fonction d'un ou plusieurs parmi :
une taille relative de l'image constitutive dans un espace rendu de l'image composite (506) ;
une résolution de l'image constitutive ;
une centralité de l'emplacement de l'image constitutive dans l'espace rendu de l'image composite (506) ; et
un point de focalisation du spectateur dans l'espace rendu de l'image composite.

12. Procédé (600) selon l'une quelconque des revendications 1 à 9, dans lequel la détermination (604) de l'intention de rendu commune inclut l'identification d'une intention de rendu préférée comme intention de rendu commune.

13. Procédé (600) selon la revendication 12 comprenant en outre l'identification de l'intention de rendu préférée fondée sur l'un ou les deux parmi :
données d'entrée reçues via une interface utilisateur ; et
informations contenues dans un fichier de configuration.

14. Appareil (501A, 800) configuré pour mettre en œuvre le procédé (600) selon l'une quelconque des revendications 1 à 13.

15. Support lisible par ordinateur contenant des instructions qui, lorsqu'elles sont exécutées par un ou plusieurs processeurs, amènent les un ou plusieurs processeurs à réaliser le procédé (600) selon l'une quelconque des revendications 1 à 13.
